# EUROPÄISCHE PATENTSCHRIFT

(11) **EP 3 719 329 B1**
(45) Veröffentlichungstag und Bekanntmachung des Hinweises auf die Patenterteilung: **16.08.2023**
(21) Anmeldenummer: 20164957.1
(22) Anmeldetag: 23.03.2020
(51) Int. Cl.: F16B 19/10

(54) **HEFTVORRICHTUNG ZUM ZUMINDEST TEMPORÄREN BEFESTIGEN VON BAUTEILEN ANEINANDER**
DEVICE FOR AT LEAST TEMPORARILY ATTACHING OF COMPONENTS TO EACH OTHER
DISPOSITIF DE BROCHAGE PERMETTANT DE FIXER AU MOINS TEMPORAIREMENT DES COMPOSANTS LES UNS AUX AUTRES

(30) Priorität: 27.03.2019 DE 102019107820
(43) Veröffentlichungstag der Anmeldung: 07.10.2020
(73) Patentinhaber: Airbus Operations GmbH, 21129 Hamburg (DE)
(72) Erfinder: Skirke, Jörn, 21129 Hamburg (DE); Kornhuber, Steffen, 21129 Hamburg (DE); Gessenharter, Alexander, 21129 Hamburg (DE)
(74) Vertreter: LKGLOBAL Lorenz & Kopf Patentanwalt Attorney at Law PartG mbB

(56) Entgegenhaltungen:
- BE-A- 666 754
- US-A- 3 253 495
- US-A- 3 377 907
- US-A- 3 377 908
- US-A- 4 907 922
- US-A- 5 066 179
- US-A1- 2014 044 498

## Beschreibung

### TECHNISCHES GEBIET

Die Erfindung betrifft eine Heftvorrichtung zum zumindest temporären Befestigen von Bauteilen aneinander sowie ein Verfahren zum zumindest temporären Befestigen von Bauteilen aneinander.

### HINTERGRUND DER ERFINDUNG

Bei der Herstellung von großformatigen Bauteilen, beispielsweise von Flugzeugrümpfen, werden oftmals Nietverfahren eingesetzt. Sollen beispielsweise einzelne Axialabschnitte von Flugzeugrümpfen, die auch als Rumpftonnen bezeichnet werden, mithilfe von Nietverbindungen miteinander verbunden, ist ihre präzise Ausrichtung zueinander erforderlich. Es ist bekannt, die Fügeflächen der zu verbindenden Rumpftonnen mithilfe von verfahrbaren Tragrahmen zueinander zu positionieren, um dann die Fügeflächen gemeinsam zu bohren und mit Nietverbindungen auszustatten. Das Ausrichten der Fügestellen ist aufwendig, ebenso das Anfertigen von Durchgangsbohrungen. Diese erfordern üblicherweise das Auseinanderbewegen der miteinander zu verbindenden Bauteile nach dem eigentlichen Bohren, das anschließende Entgraten der Bohrungen, das Reinigen der Fügeflächen und das Anbringen eines Dichtmittels. Erst danach werden die Rumpftonnen wieder aneinander positioniert und die Nietverbindungen werden hergestellt.

Es sind Verfahren bekannt, die auf einem ähnlichen Prinzip basieren. Allerdings werden dabei nicht sämtliche Bohrungen in den Fügeflächen angebracht, sondern lediglich ca. 20-50%, die ausreichen, eine ausreichend festes Heften der Bauteile aneinander zu erreichen. Diese Bohrungen werden wie üblich gesäubert und entgratet, die Fügeflächen werden mit einem Dichtmittel versehen und wieder zueinander ausgerichtet. In die bereits hergestellten Bohrungen werden Heftvorrichtungen eingesetzt, die etwa Schrauben- oder Bolzenverbindungen umfassen. Nach dem Heften der Bauteile aneinander werden an allen anderen vorgesehenen Bohrungen Nietverbindungen durch automatisierte Vorrichtungen und Verfahren hergestellt, wobei der aufwendige Prozess des Entgratens und Säuberns entfällt, da an den entsprechenden Bohrstellen eine ausreichende Flächenpressung der Bauteile zueinander vorliegt. Die Heftvorrichtungen werden nach Anbringen der Nietverbindungen entfernt und die dann freiwerdenden Bohrungen anschließend ebenfalls mit Nietverbindungen ausgestattet.

US 2014/044498 A1 zeigt ein Blindbefestigungselement mit einem Zugkernbolzen, der einen Schaft mit einem Kopf aufweist, und einer Hülse, die einen länglichen Körper mit einem Kopf und einer konischen Kerbe aufweist, die innerhalb einer Außenfläche davon ausgebildet ist und durch einen konischen Abschnitt mit einer Neigung und einer durch Reibung verbesserten Oberfläche definiert ist.

US 3 377 908 A offenbart eine Blindnietanordnung mit einem Hohlniet und einem Stift, der zum Setzen des Hohlniets axial aus dem Hohlniet gezogen werden kann. Ein Sicherungsring, der in einer inneren ringförmigen Aussparung im Kopf des Hohlniets und in einer äußeren Ringnut in einer konischen Ringschulter auf dem Stift angeordnet ist, dient dazu, den Stift und den Hohlniet nach dem Setzen des Hohlniets durch den Stift miteinander zu verriegeln. Das Setzen der Blindnietbaugruppe wird ausschließlich durch die Verformung des Schließringes in die innere Ringaussparung im Nietkopf und die äußere Ringnut im Stift gesteuert.

### ZUSAMMENFASSUNG DER ERFINDUNG

Während das Heften einen besonders großen Vorteil zur Herstellung der gewünschten Nietverbindungen aufweist, ist das Anbringen und Lösen der Heftvorrichtungen selbst relativ aufwendig. Der manuelle Aufwand ist groß und die Kosten für die Heftvorrichtungen, die mehrfach verwendbar und manuell anzubringen sind, relativ hoch. Das automatisierte Herstellen der Heftverbindungen ist schwierig.

Es ist folglich als eine Aufgabe der Erfindung anzusehen, eine Heftvorrichtung zum zumindest zeitweisen Befestigen zweier Bauteile aneinander vorzuschlagen, die die vorangehend genannte Nachteile löst. Insbesondere ist eine Aufgabe der Erfindung, eine Heftvorrichtung vorzuschlagen, die möglichst einfach und automatisiert einsetzbar ist, zu besonders geringen Kosten realisierbar ist und dennoch eine möglichst hohe Heftkraft bereitstellt.

Die Aufgabe wird gelöst durch die Merkmale des Anspruchs 1. Vorteilhafte Ausführungsformen und Weiterbildungen sind den Unteransprüchen und der nachfolgenden Beschreibung zu entnehmen.

Es wird eine Heftvorrichtung zum zumindest temporären Befestigen von Bauteilen aneinander vorgeschlagen, aufweisend eine Hülse mit einem ersten Ende, einem zweiten Ende, einer Axialbohrung und einem an dem ersten Ende radial vorspringenden Kragen, einen länglichen Spanndorn mit einem Kopfende und einem Spannende, wobei der Spanndorn an dem zweiten Ende der Hülse in die Axialbohrung einbringbar ist, mit dem Kopfende mit einer Hülsenrandfläche in Anschlag bringbar ist und im eingebrachten Zustand über das erste Ende aus der Hülse herausragt, wobei eine Halteeinheit vorgesehen ist, die dazu ausgebildet ist, bei in eine Öffnung eines Bauteils eingesteckter Heftvorrichtung den Spanndorn zu halten, wobei die Hülse ein verformbares Material aufweist, das bei in eine Öffnung eines Bauteils eingesteckter Heftvorrichtung beim Bewegen des Kopfendes des Spanndorns in Richtung des ersten Endes der Hülse an das Bauteil gequetscht wird, und wobei der Spanndorn eine zwischen dem Kopfende und dem Spannende positionierte Sollbruchstelle mit einem geschwächten Querschnitt aufweist, die dazu ausgebildet ist, dass bei gequetschter Hülse der Spanndorn an der Sollbruchstelle bricht und ein das Spannende aufweisender Abschnitt gelöst ist.

Die erfindungsgemäße Heftvorrichtung weist folglich mehrere Bauteile auf.

Die Hülse aus einem verformbaren Material weist bevorzugt eine zylindrische, längliche, runde Form auf, die zwei stirnseitige Enden besitzt. Das erste Ende weist einen radial vorspringenden Kragen auf, der beispielsweise wie eine flache Kreisscheibe ausgeführt ist und bevorzugt bündig mit dem ersten Ende abschließt. Das entgegengesetzte zweite Ende ist ein Einführende, das in die Öffnung der betreffenden Bauteile eingesteckt wird. Die Hülse weist eine Axialbohrung auf, in die der Spanndorn eingebracht wird.

Der Spanndorn weist eine bevorzugt längliche, vollzylindrische, geradlinige Form auf, die die Länge der Hülse übersteigt. Das Kopfende könnte ebenso einen radial vorspringenden Kragen aufweisen, der mit einer stirnseitigen Hülsenrandfläche an dem zweiten Ende der Hülse in Flächenkontakt gerät. Befindet sich der Spanndorn mit dem Kopfende in Flächenkontakt mit der Hülsenrandfläche, erstreckt er sich vollständig durch die Axialbohrung und ragt aus dem ersten Ende hervor.

Ist die Hülse in eine Öffnung eingesteckt, d.h. ist das zweite Ende der Hülse in eine Öffnung eingeführt, kann durch Drücken auf den Kragen die Hülse durch Anschlagen des Kragens an die Hülsenrandfläche an der Öffnung ausgerichtet werden. In dieser Position soll die Hülse verbleiben. Durch die allgemein beliebig geformte Halteeinheit wird der Spanndorn in dieser Position in der Hülse festgehalten. Derartige Heftvorrichtung können folglich automatisch nacheinander gegriffen und eingesetzt werden, sie sind gut für eine automatische Bearbeitung geeignet. Das Einführen des Spanndorns nach dem Einsetzen der Hülse in die Öffnung ist nicht notwendig.

Der herausragende Spanndorn erlaubt das Greifen durch eine Greifvorrichtung eines robotergeführten Werkzeugs. Das Werkzeug ist dazu ausgebildet, den Spanndorn derart zu bewegen, dass die mit dem Kopfende in Flächenkontakt stehende Ringfläche an dem zweiten Ende der Hülse in Richtung des Kragens gezogen wird, so dass die Hülse an das Bauteil gequetscht wird. Das Bewegen des Spanndorns kann, wie weiter nachfolgend ausgeführt wird, das Ziehen oder das Drehen des Spanndorns umfassen. Durch die Halteeinheit wird der Spanndorn auch bei gequetschter Hülse gehalten. Die Hülse wird in der gequetschten Position folglich wiederum durch den Spanndorn gehalten.

Aufgrund der zwischen dem Kopfende und dem Spannende positionierten Sollbruchstelle kann bei Erreichen einer vorbestimmten Zugspannung, die beispielsweise einen gequetschten Zustand der Hülse repräsentiert, der Spanndorn brechen. Die Sollbruchstelle ist dabei so angeordnet, dass sie innerhalb der Hülse liegt. Dies ist besonders von Vorteil, da die Heftvorrichtung nach dem Herstellen von Nietverbindungen wieder gelöst wird und durch den abgebrochenen Teil des Spanndorns dann ein Teil der Axialbohrung in der Hülse als Führung für einen Bohrer oder Fräser fungiert, der sich in die Axialbohrung zumindest teilweise einführen lässt, um dann den Spanndorn und die Hülse auszubohren. Die Hülse kann dadurch leicht aus der Öffnung gestoßen werden, so dass folglich die Heftvorrichtung nach ihrem Gebrauch aus der Öffnung fallen und nach Fertigstellung der Nietverbindungen aufgesammelt werden kann.

Der besondere Vorteil liegt folglich in der Möglichkeit, die Vorrichtung kostengünstig und zur einmaligen Verwendung zu realisieren und außerdem die Handhabung mit einer automatischen Bearbeitungsvorrichtung zu erlauben. Dies kann bereits das Einstecken der Heftvorrichtung in eine Öffnung umfassen, das Herstellen der Quetschverbindung und das anschließende Entfernen mithilfe einer spanabhebenden Bearbeitung. Das Vorsehen einer Halteeinheit zum Halten des Spanndorns kann zur Realisierung einer hohen Heftkraft genutzt werden. Die Kosten für die Heftvorrichtung können dadurch deutlich reduziert und die Handhabung beschleunigt werden. Die erfindungsgemäße Heftvorrichtung erfordert nur eine einseitige Zugänglichkeit sowohl für das Setzen als auch für ein Entfernen, z.B. Ausbohren, wodurch die einfache Automatisierbarkeit des Setzens und Ausbohrens erreicht wird. Insgesamt wird folglich eine wirkungsvolle, kostengünstige und einfach zu handhabende Heftvorrichtung zur Einmalverwendung vorgeschlagen.

Die Halteeinheit ist durch einen trichterförmigen Abschnitt an dem ersten Ende der Axialbohrung und ein separates Kragenelement ausgebildet, wobei das Kragenelement einen radialen Vorsprung,
einen sich hiervon axial und verjüngend erstreckenden, zu dem trichterförmigen Abschnitt korrespondierend ausgebildeten und eine durchgängige Bohrung zum Durchführen des Spanndorns besitzenden Einsteckabschnitt aufweist. Das Kragenelement lässt sich folglich mit dem Einsteckabschnitt in den trichterförmigen Abschnitt der Axialbohrung einstecken. Der Spanndorn ist durch die Bohrung des Kragenelements führbar, so dass der Spanndorn vollständig durch die Hülse und das Kragenelement verläuft. Der Spanndorn kann dadurch mittels des Kragenelements an der Heftvorrichtung gehalten werden. Bei dem Einstecken des Kragenelements in den trichterförmigen Abschnitt erfolgt eine radiale Verspannung zwischen der Hülse, dem Kragenelement und dem Spanndorn. Der trichterförmige Abschnitt ist so dimensioniert, dass er zwar deutlich in die Hülse hineinragt, jedoch auch deutlich die gesamte axiale Länge der Hülse unterschreitet. Der Einsteckabschnitt und der trichterförmige Abschnitt können einen Aufweitungs- bzw. Verjüngungswinkel besitzen, der beispielsweise deutlich unterhalb von 45° und beispielhaft mindestens 5° beträgt. Hierdurch kann eine gewisse Keilwirkung zur radialen Verspannung erreicht werden. Der radiale Vorsprung des Kragenelements kann bei vollständig in dem trichterförmigen Abschnitt befindlichen Kragenelement auf dem Kragen der Hülse aufliegen. Bevorzugt ist folglich der radiale Vorsprung des Kragenelements kleiner als der Kragen der Hülse.

In dem trichterförmigen Abschnitt ist folglich zumindest ein teilweise an einer Innenfläche des trichterförmigen Abschnitts umlaufendes erstes Eingriffselement angeordnet, wobei an dem Einsteckabschnitt zumindest ein teilweise an einer Außenfläche des Einsteckabschnitts umlaufendes zweites Eingriffselement angeordnet ist, das dazu ausgebildet ist, mit dem ersten Eingriffselement eine Rastverbindung einzugehen. Die Eingriffselemente des Einsteckabschnitts und des trichterförmigen Abschnitts der Axialbohrung greifen folglich ineinander ein und bilden damit eine zusammenhängende Einheit. Hierdurch kann eine besonders robuste Vormontage der Heftvorrichtung erreicht werden, denn die drei Elemente können zusammengesteckt und lose miteinander verbunden, ohne
dass Gefahr besteht, dass
die Heftvorrichtung beim Lagern, Handhaben und Einsetzen auseinanderfällt. Zudem wird die Heftkraft durch die Eingriffselemente deutlich vergrößert.

Bevorzugt sind dann das erste Eingriffselement und das zweite Eingriffselement als Rastelemente ausgebildet. Durch Ausführung der Eingriffselemente als Rastelemente kann eine besonders leicht herstellbare Rastverbindung realisiert werden. Es ist dann nur erforderlich, das Kragenelement in den trichterförmigen Abschnitt der Axialbohrung einzustecken und leicht anzudrücken, so dass eine hochbelastbare Rastverbindung besteht.

In einer bevorzugten Variante sind das erste Eingriffselement und das zweite Eingriffselement als Widerhaken ausgebildet. Bei der Ausführung als Widerhaken ist die Rastverbindung sehr leicht herstellbar, ähnlich wie bei einem Kabelbinder. Die Verbindung ist jedoch praktisch unlösbar oder nur mit einem erheblichen Kraftaufwand lösbar, der zur Zerstörung der Widerhaken führt. Die Widerhaken können folglich die Anwendungssicherheit erhöhen.

Weiter vorteilhaft könnte der radiale Vorsprung des Kragenelements dazu ausgebildet sein, bei in den trichterförmigen Abschnitt der Hülse eingepresstem Kragenelement auf den Kragen aufgelegt zu werden. Der radiale Vorsprung des Kragenelements bildet folglich selbst einen Kragen und kann zur Führung des Kragenelements an der Hülse und damit den miteinander zu verbindenden Bauteilen genutzt werden.

Das Kragenelement weist in einer vorteilhaften Variante ein verformbares Material auf, wobei das Kragenelement dazu ausgebildet ist, radial nach innen gequetscht zu werden, wenn es in den trichterförmigen Abschnitt eingepresst wird. Durch das Quetschen wird ein radial durchgängiger Flächen- bzw. Materialkontakt hervorgerufen, was die Heftkraft erhöhen kann.

Die Sollbruchstelle des Spanndorns könnte in Axialrichtung von dem radialen Vorsprung in Richtung des Einsteckabschnitts beabstandet sein. Folglich entsteht eine Axialführung für einen Bohrer oder einen Fräser in dem Kragenelement durch eine Bruchfläche des Spanndorns, die von einem äußeren Ende der durchgehenden Bohrung beabstandet ist.

Bevorzugt besteht der Spanndorn aus einem festeren Material als die Hülse. Der Spanndorn kann dann folglich sehr kostengünstig und mit einer geringen Materialstärke hergestellt werden und unterliegt nicht dem Risiko, dass bei einem Quetschen der Hülse der Spanndorn in die Länge gezogen wird. Es ist vorstellbar, die Hülse aus einer Aluminiumlegierung oder einem Kunststoff herzustellen. Der Spanndorn könnte aus einem Stahl oder einer Aluminiumlegierung hergestellt sein. Das Kragenelement könnte ebenso aus einer Aluminiumlegierung oder einem Kunststoff hergestellt sein.

Bei der Realisierung der erfindungsgemäßen Heftvorrichtung ist es sinnvoll, wenn möglich alle Teile des Heftelements, die unmittelbar in Berührung mit den Bauteilen bzw. der Bohrung kommen, aus Kunststoff herzustellen. Damit können Beschädigungen, wie etwa Kratzer, des Bauteils vermieden werden. Dies ist insbesondere bei der Verwendung zum Heften von Rumpfbauteilen eines Flugzeugs sinnvoll. Der Kunststoff sollte dabei so ausgewählt werden, dass eine ausreichende Klemmkraft erreicht werden kann.

Die Erfindung betrifft ferner ein Verfahren zum Heften zweier Bauteile aneinander, aufweisend die Schritte des Einsteckens einer vorangehend beschriebenen Heftvorrichtung in eine durchgehende Öffnung zweier Bauteile und des Bewegens des Spanndorns in eine zu dem ersten Ende der Hülse gewandten Richtung zum Quetschen der Hülse an die Bauteile bis der Spanndorn bricht.

Das Verfahren kann nach Gebrauch der Heftvorrichtung die Schritte des Ausbohrens eines verbliebenen Teils des Spanndorns aus der Heftvorrichtung und des Entfernens der Hülse aufweisen.

### KURZE BESCHREIBUNG DER FIGUREN

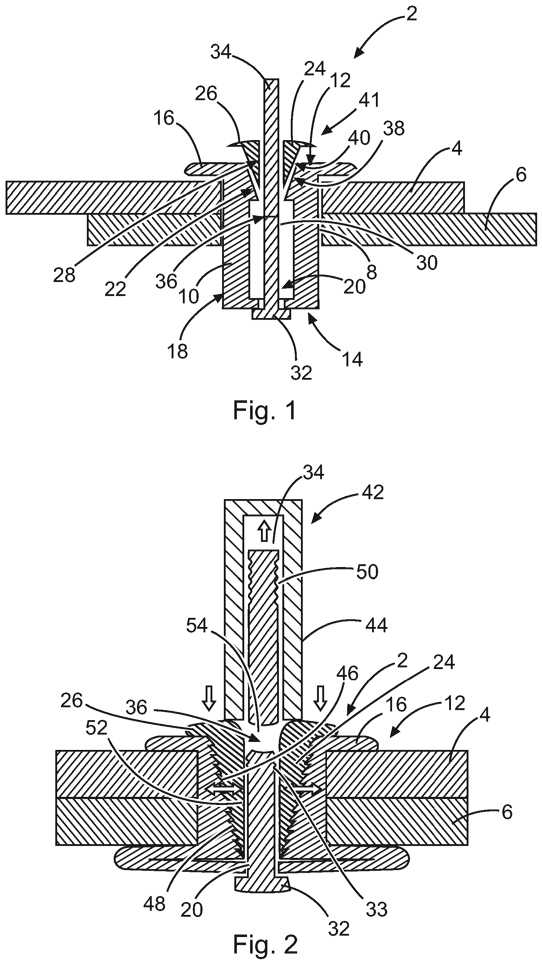

Weitere Merkmale, Vorteile und Anwendungsmöglichkeiten der vorliegenden Erfindung ergeben sich aus der nachfolgenden Beschreibung der Ausführungsbeispiele und den Figuren. Dabei ist nur das erste Ausführungsbeispiel in Figuren 1-4 erfindungsgemäß. In den Figuren stehen weiterhin gleiche Bezugszeichen für gleiche oder ähnliche Objekte.
Fig. 1 bis 4 zeigen ein erstes Ausführungsbeispiel in unterschiedlichen Zuständen in einem Seitenschnitt.
Fig. 5 zeigt ein zweites Ausführungsbeispiel in einem befestigten Zustand in einem Seitenschnitt.
Fig. 6 und 7 zeigen ein drittes Ausführungsbeispiel in einem unbefestigten Zustand und einem befestigten Zustand in einem Seitenschnitt.

### DETAILLIERTE DARSTELLUNG EXEMPLARISCHER

### AUSFÜHRUNGSFORMEN

Fig. 1 zeigt eine Heftvorrichtung 2 zum zumindest temporären Befestigen von Bauteilen 4 und 6 aneinander. Hier ist die Heftvorrichtung 2 in eine Öffnung 8 eingesetzt dargestellt. Die Bauteile 4 und 6 können beispielsweise flächenhafte oder flächige Komponenten für einen Abschnitt eines Flugzeugrumpfs sein, die vor einer endgültigen Anfertigung von Nietverbindungen aneinandergeheftet werden.

Die Heftvorrichtung 2 weist eine Hülse 10 mit einem ersten Ende 12 und einem zweiten Ende 14 auf. An dem ersten Ende 12 ist ein radial vorspringender Kragen 16 vorgesehen, der exemplarisch eine kreisförmige Grundfläche aufweist. Die Hülse 10 weist ansonsten eine zylindrische Mantelfläche 18 auf, die in dem gezeigten Beispiel von unterhalb des Kragens 16 bis zu dem zweiten Ende 14 einen konstanten Außendurchmesser aufweist. In der Hülse 10 ist eine Axialbohrung 20 vorgesehen, die entlang eines wesentlichen Teils der Hülse 10 einen größeren Durchmesser aufweist, als an dem zweiten Ende 14. An dem ersten Ende 12 ist ein trichterförmiger Abschnitt 22 ausgebildet, der sich in zu dem ersten Ende 12 hin gewandter Richtung aufweitet.

Desweiteren ist ein Kragenelement 24 mit einem radialen Vorsprung 26 und einem sich von dem Vorsprung 26 aus verjüngenden Einsteckabschnitt 28 vorgesehen. Das Kragenelement 24 steckt in dem trichterförmigen Abschnitt 22 der Axialbohrung 20. Ein Spanndorn 30 erstreckt sich in der Axialbohrung 20, weist ein Kopfende 32 und ein Spannende 34 auf. Das Kopfende 32 weist einen größeren Außendurchmesser auf, als die Axialbohrung 20 an dem zweiten Ende 14. Der Spanndorn 30 erstreckt sich weiterhin durch das Kragenelement 24 und ragt aus der Hülse 10 nach außen.

Der Spanndorn 30 weist zwischen dem Kopfende 32 und dem Spannende 34 eine Sollbruchstelle 36 auf, die einen geschwächten Querschnitt besitzt und dazu ausgebildet ist, bei Überschreiten einer bestimmten Zugspannung in dem Spanndorn 30 ein Brechen des Spanndorns 30 zu verursachen. Die Heftvorrichtung 2 ist so ausgebildet, dass zunächst die Hülse 10 in die betreffende Öffnung 8 eingesteckt werden kann, so dass der Kragen 16 mit einer Oberfläche des oberen Bauteils 4 in einen Flächenkontakt gerät. Damit ist die Hülse 10 korrekt in der Öffnung 8 platziert. Durch ein Niederhalten des Kragens 16 und ein gleichzeitiges Herausbefördern des Spanndorns 30, d.h. ein Bewegen des Kopfendes 32 in Richtung des ersten Endes 12 der Hülse 10, wird die Hülse 10 an einer Unterseite des unteren Bauteils 6 zu dem Bauteil 6 hin gequetscht.

Durch das in den trichterförmigen Abschnitt 22 eingebrachte Kragenelement 24 kann der Spanndorn 30 zunächst in der Hülse 10 gehalten werden. Es erfolgt dabei ein zunächst nur leichtes Klemmen des Spanndorns 30 in dem Kragenelement 24 und der Hülse 10. Bei gequetschter Hülse 10 kann durch das Klemmen des Spanndorns 30 ein Heften noch weiter verbessert werden. Um dies zu unterstützen kann eine Innenfläche 38 des trichterförmigen Abschnitts 22 mit Eingriffselementen in Form von Rastelementen versehen sein (hier nicht sichtbar), wobei eine Außenfläche 40 des Kragenelements 24 mit korrespondierenden, als Rastelemente ausgeführten Eingriffselementen ausgestattet ist (ebenfalls hier nicht sichtbar). Durch das Einstecken des Kragenelements 24 in den trichterförmigen Abschnitt 22 rastet das Kragenelement 24 folglich in dem trichterförmigen Abschnitt 22 ein und hält dabei den Spanndorn 30 fest. Die hieran beteiligten Elemente können folglich als eine Halteeinheit 41 betrachtet werden.

Die Längserstreckung der trichterförmigen Abschnitts 22 ist derart dimensioniert, dass er eine Mindestklemmlänge der zu verspannenden Bauteile 4 und 6 nicht überschreitet. Folglich kann die Heftvorrichtung 2 auch für unterschiedliche Klemmlängen eingesetzt werden. Weiterhin sind in den Figuren lediglich beispielhaft nur zwei miteinander zu verbindende Bauteile 4 und 6 gezeigt. Es versteht sich, dass auch mehr als zwei Bauteile geheftet werden können und die Klemmlänge dann größer ist als hier gezeigt. Dies gilt für alle Ausführungsbeispiele.

Wie in Fig. 2 darstellt, eignet sich diese Heftvorrichtung 2 besonders für eine automatisierte Handhabung von einer einzigen Seite der Bauteile 4 und 6 aus. Das Einsetzen der Heftvorrichtung sowie das darauffolgende Verspannen kann vollständig ohne einen manuellen Eingriff erfolgen. Hierzu wird ein hier schematisch dargestelltes, robotergeführtes Werkzeug 42 gezeigt, welches eine Aufsetzhülse 44 besitzt, mit der das Kragenelement 24 in den trichterförmigen Abschnitt 22 der Hülse 10 gedrückt wird. Hierbei gehen zweite Eingriffselemente 46 mit ersten Eingriffselementen 48 der Hülse 10 eine Rastverbindung ein. Die Eingriffselemente 46 und 48 sind in Fig. 2 als Widerhaken ausgeführt. Gleichzeitig wird der Spanndorn 30 von dem Werkzeug 42 in Richtung des ersten Endes 12 gezogen, so dass das zweite Ende 14 der Hülse 10 von unten an das untere Bauteil 6 gequetscht wird. Zum Erleichtern des Ausübens einer Zugkraft auf den Spanndorn 30 weist dieser mehrere rillenförmige Vertiefungen 50 an seinem Spannende 34 auf. Nach Erreichen des in Fig. 2 gezeigten Zustands bei vollständig gequetschter Hülse 10 kann eine Grenzspannung erreicht werden, die zum Brechen des Spanndorns 30 an der Sollbruchstelle 36 führt. Folglich bricht ein Teil des Spanndorns 30 ab und dadurch resultierend bleibt ein Teil einer durchgehenden Bohrung 52 in dem Kragenelement 24 frei. Dies erlaubt, in einen dadurch entstehenden Hohlraum 54 ein spanabhebendes Werkzeug einzusetzen, um den Spanndorn 30 wieder zu entfernen und mit ihm die gesamte Heftvorrichtung 2. Der abgebrochene Teil des Spanndorns 30 wird durch das Kragenelement 24 festgeklemmt. Dies wird durch weitere, rillenartige Vertiefungen 33 begünstigt, welche sich mit dem Kragenelement 24 kraft- und/oder formschlüssig verbinden. Die Spannkraft des Spanndorns 30 kann damit auf das Kragenelement 24 übertragen werden.

Durch das Quetschen der Hülse an das untere Bauteil 6 entsteht eine ausreichend hohe Flächenpressung zwischen den beiden Bauteilen 4 und 6. In einem geringen Abstand hierzu kann die Flächenpressung ausreichen, um ohne eine separate Klemmeinrichtung beide Bauteile 4 und 6 gleichzeitig zu bohren, ohne dass Bohrspäne zwischen die beiden Bauteile 4 und 6 geraten. Folglich kann durch das Anordnen von mehreren Heftvorrichtungen 2, die beispielsweise zwischen 20 und 50% aller herzustellenden Bohrungen ausfüllen, die zum Herstellen von Nietverbindungen vorgesehen sind. Dies kann ausreichen, um bei eingesetzten Heftvorrichtungen 2 alle verbleibenden 50-80 % der Nietverbindungen in einem Arbeitsdurchgang herzustellen. Danach können Heftvorrichtungen 2 alle entnommen werden, um an deren Stelle jeweils eine endgültige Nietverbindung zu realisieren.

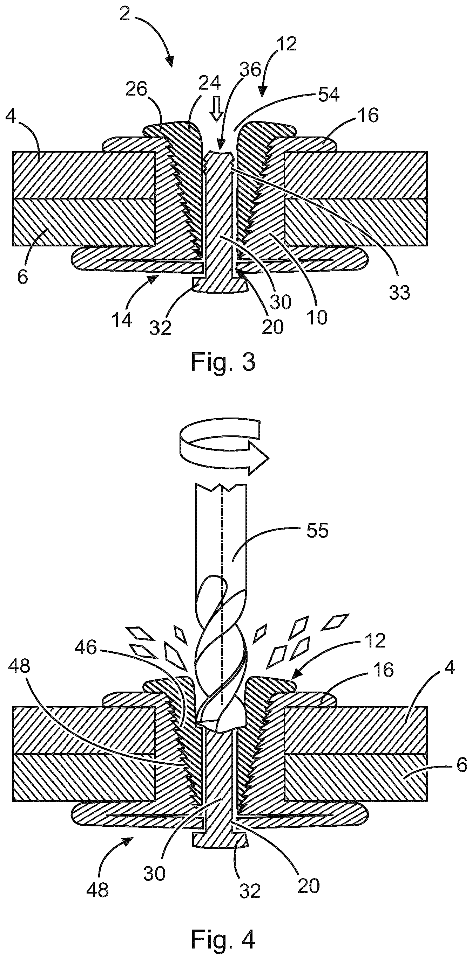

Fig. 3 zeigt dieselbe Darstellung wie in Fig. 2, jedoch ohne das robotergeführte Werkzeug 42. Hier ist der Hohlraum 54 gut ersichtlich, der zum Aufnehmen und Führen eines Bohrers 55oder Fräsers verwendbar ist. Dieser wird in Fig. 4 dargestellt, wie er sukzessive den Spanndorn 30 entfernt. Der Durchmesser des Bohrers 55 ist hierbei etwas größer als der Durchmesser des Spanndorns 30 gewählt.

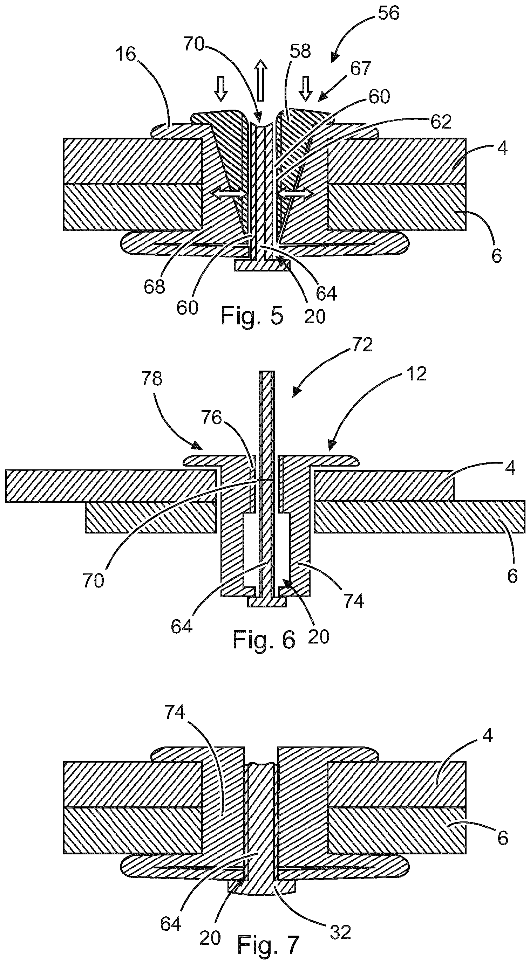

Fig. 5 zeigt eine alternative Ausführung in Form einer Heftvorrichtung 56. Hier ist ein Kragenelement 58 vorgesehen, welches eine Innenbohrung 60 mit einem Innengewinde 62 aufweist. Es erstreckt sich ein Spanndorn 64 mit einem Außengewinde 66 durch das Kragenelement 58. Dadurch wird eine Halteeinheit 67 ausgebildet. Eine Hülse 68 ist sehr ähnlich wie die Hülse 10 ausgebildet, weist jedoch keine Eingriffselemente 48 auf. In Fig. 5 ist bereits die gequetschte Hülse 68 gezeigt und der Spanndorn 64 ist an einer Sollbruchstelle 70 bereits gebrochen. Das Bewegen des Spanndorns 64 erfolgt hier durch Rotation. Die Gewinde 62 und 66 erlauben eine sehr gute Verspannung bei gebrochenem Spanndorn 64 durch eine kraftschlüssige Verbindung.

Fig. 6 zeigt eine weitere Variante einer Heftvorrichtung 72, die lediglich aus zwei Teilen besteht. Hier ist der Spanndorn 64 aus Fig. 5 mit einer anderen Hülse 74 kombiniert, die lediglich an ihrem ersten Ende 12 ein Innengewinde 76 aufweist. Die Erstreckung des Innengewindes 76 ist so dimensioniert, dass es eine Mindestklemmlänge der zu verspannenden Bauteile 4 und 6 nicht überschreitet. Hierdurch wird eine Halteeinheit 78 ausgebildet. Dies ist eine besonders einfache Variante, da lediglich zwei Komponenten verwendet werden müssen. Wie in Fig. 7 gezeigt ist ein ausreichendes Quetschen auch ohne ein Kragenelement möglich. Durch selbsthemmend ausgebildete Gewinde 66 und 76 wird eine kraftschlüssige Verbindung realisiert.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Heftvorrichtung
- 4: Bauteil
- 6: Bauteil
- 8: Öffnung
- 10: Hülse
- 12: erstes Ende
- 14: zweites Ende
- 16: Kragen
- 18: Mantelfläche
- 20: Axialbohrung
- 22: trichterförmiger Abschnitt
- 24: Kragenelement
- 26: Vorsprung
- 28: Einsteckabschnitt
- 30: Spanndorn
- 32: Kopfende
- 33: Vertiefung
- 34: Spannende
- 36: Sollbruchstelle
- 38: Innenfläche
- 40: Außenfläche
- 41: Halteeinheit
- 42: Werkzeug
- 44: Aufsetzhülse
- 46: zweites Eingriffselement
- 48: erstes Eingriffselement
- 50: Vertiefung
- 52: Bohrung
- 54: Hohlraum
- 55: Bohrer
- 56: Heftvorrichtung
- 58: Kragenelement
- 60: Bohrung / Innenbohrung
- 62: Innengewinde
- 64: Spanndorn
- 66: Außengewinde
- 67: Halteeinheit
- 68: Hülse
- 70: Sollbruchstelle
- 72: Heftvorrichtung
- 74: Hülse
- 76: Innengewinde
- 78: Halteeinheit

## Patentansprüche

1. Heftvorrichtung (2, 56, 72) zum zumindest temporären Befestigen von Bauteilen (4, 6) aneinander, aufweisend:
eine Hülse (10, 68, 74) mit einem ersten Ende (12), einem zweiten Ende (14), einer Axialbohrung (20) und einem an dem ersten Ende (12) radial vorspringenden Kragen (16),
einen länglichen Spanndorn (30, 64) mit einem Kopfende (32) und einem Spannende (34),
wobei der Spanndorn (30, 64) an dem zweiten Ende (14) der Hülse (10, 68, 74) in die Axialbohrung (20) einbringbar ist, mit dem Kopfende (32) mit einer Hülsenrandfläche in Anschlag bringbar ist und im eingebrachten Zustand über das erste Ende (12) aus der Hülse (10, 68, 74) herausragt,
wobei eine Halteeinheit (41, 67, 78) vorgesehen ist, die dazu ausgebildet ist, bei in eine Öffnung (8) eines Bauteils (4, 6) eingesteckter Heftvorrichtung (2, 56, 72) den Spanndorn (30, 64) zu halten,
wobei die Hülse (10, 68, 74) ein verformbares Material aufweist, das bei in eine Öffnung (8) eines Bauteils (4, 6) eingesteckter Heftvorrichtung (2, 56, 72) beim Bewegen des Kopfendes (32) des Spanndorns (30, 64) in Richtung des ersten Endes (12) der Hülse (10, 68, 74) an das Bauteil (4, 6) gequetscht wird,
wobei der Spanndorn (30, 64) eine zwischen dem Kopfende (32) und dem Spannende (34) positionierte Sollbruchstelle (36, 70) mit einem geschwächten Querschnitt aufweist, die dazu ausgebildet ist, dass bei gequetschter Hülse (10, 68, 74) der Spanndorn (30, 64) an der Sollbruchstelle (36, 70) bricht und ein das Spannende (34) aufweisender Abschnitt gelöst ist,
wobei die Halteeinheit (41, 67, 78) durch einen trichterförmigen Abschnitt (22) an dem ersten Ende (12) der Axialbohrung (20) und ein separates Kragenelement (24, 58) ausgebildet ist,
wobei das Kragenelement (24, 58) einen radialen Vorsprung (26), einen sich hiervon axial und verjüngend erstreckenden, zu dem trichterförmigen Abschnitt (22) korrespondierend ausgebildeten und eine durchgängige Bohrung (60) zum Durchführen des Spanndorns (30, 64) besitzenden Einsteckabschnitt (28) aufweist,
wobei in dem trichterförmigen Abschnitt (22) zumindest ein teilweise an einer Innenfläche (38) des trichterförmigen Abschnitts (22) umlaufendes erstes Eingriffselement (48) angeordnet ist und
wobei an dem Einsteckabschnitt (28) zumindest ein teilweise an einer Außenfläche (40) des Einsteckabschnitts (28) umlaufendes zweites Eingriffselement (46) angeordnet ist, das dazu ausgebildet ist, mit dem ersten Eingriffselement (48) eine Rastverbindung einzugehen.

2. Heftvorrichtung (2, 56, 72) nach Anspruch 1,
wobei das erste Eingriffselement (48) und das zweite Eingriffselement (46) als Rastelemente ausgebildet sind.

3. Heftvorrichtung (2, 56, 72) nach Anspruch 1 oder 2,
wobei das erste Eingriffselement (48) und das zweite Eingriffselement (46) als Widerhaken ausgebildet sind.

4. Heftvorrichtung (2, 56, 72) nach einem der vorhergehenden Ansprüche,
wobei der radiale Vorsprung (26) des Kragenelements (24, 58) dazu ausgebildet ist, bei in den trichterförmigen Abschnitt (22) der Hülse (10, 68, 74) eingepresstem Kragenelement (24, 58) auf den Kragen aufgelegt zu werden.

5. Heftvorrichtung (2, 56, 72) nach einem der vorhergehenden Ansprüche,
wobei das Kragenelement (24, 58) ein verformbares Material aufweist, und
wobei das Kragenelement (24, 58) dazu ausgebildet ist, radial nach innen gequetscht zu werden, wenn es in den trichterförmigen Abschnitt (22) eingepresst wird.

6. Heftvorrichtung (2, 56, 72) nach einem der vorhergehenden Ansprüche,
wobei die Sollbruchstelle (36, 70) des Spanndorns (30, 64) in Axialrichtung von dem radialen Vorsprung (26) in Richtung des Einsteckabschnitts (28) beabstandet ist.

7. Heftvorrichtung (2, 56, 72) nach einem der vorhergehenden Ansprüche,
wobei der Spanndorn (30, 64) aus einem festeren Material besteht als die Hülse (10, 68, 74).

8. Verfahren zum Heften zweier Bauteile (4, 6) aneinander, aufweisend die Schritte:
- Einstecken einer Heftvorrichtung (2, 56, 72) nach einem der Ansprüche 1 bis 7 in eine durchgehende Öffnung zweier Bauteile (4, 6) und
- Bewegen des Spanndorns (30, 64) in eine zu dem ersten Ende (12) der Hülse (10, 68, 74) gewandten Richtung zum Quetschen der Hülse (10, 68, 74) an die Bauteile (4, 6) bis der Spanndorn (30, 64) bricht.

9. Verfahren nach Anspruch 8, ferner aufweisend nach Gebrauch der Heftvorrichtung (2, 56, 72) die Schritte:
- Ausbohren eines verbliebenen Teils des Spanndorns (30, 64) aus der Heftvorrichtung (2, 56, 72) und
- Entfernen der Hülse (10, 68, 74).

## Claims

1. Tacking device (2, 56, 72) for at least temporarily attaching components (4, 6) to each other, having:
a sleeve (10, 68, 74) having a first end (12), a second end (14), an axial hole (20) and a collar (16) protruding radially at the first end (12),
an elongated mandrel (30, 64) having a head end (32) and a tensioning end (34),
wherein the mandrel (30, 64) can be inserted into the axial hole (20) at the second end (14) of the sleeve (10, 68, 74), can be brought with the head end (32) into stop contact with a sleeve rim surface and, when inserted, projects out of the sleeve (10, 68, 74) beyond the first end (12),
wherein a holding unit (41, 67, 78) is provided, which is designed to hold the mandrel (30, 64) when the tacking device (2, 56, 72) is inserted into an opening (8) in a component (4, 6),
wherein the sleeve (10, 68, 74) has a deformable material which is squashed against a component (4, 6) when the tacking device (2, 56, 72) is inserted into an opening (8) in the component (4, 6) as the head end (32) of the mandrel (30, 64) is moved in the direction of the first end (12) of the sleeve (10, 68, 74),
wherein the mandrel (30, 64) has a predetermined breaking point (36, 70) with a weakened cross section, which is positioned between the head end (32) and the tensioning end (34) and which is designed to ensure that as the sleeve (10, 68, 74) is squashed, the mandrel (30, 64) breaks at the predetermined breaking point (36, 70) and a section having the tensioning end (34) is detached,
wherein the holding unit (41, 67, 78) is formed by a funnel-shaped section (22) at the first end (12) of the axial hole (20) and by a separate collar element (24, 58),
wherein the collar element (24, 58) has a radial projection (26), an insertion section (28) which extends axially and in a tapering manner from the latter, is designed to correspond to the funnel-shaped section (22) and has a through hole (60) for the mandrel (30, 64) to be led through,
wherein at least one first engagement element (48) running partly around an inner surface (38) of the funnel-shaped section (22) is arranged in the funnel-shaped section (22) and
wherein at least one second engagement element (46) running partly around an outer surface (40) of the insertion section (28) is arranged on the insertion section (28) and is designed to enter into a latching connection with the first engagement element (48).

2. Tacking device (2, 56, 72) according to Claim 1,
wherein the first engagement element (48) and the second engagement element (46) are designed as latching elements.

3. Tacking device (2, 56, 72) according to Claim 1 or 2,
wherein the first engagement element (48) and the second engagement element (46) are designed as barbs.

4. Tacking device (2, 56, 72) according to one of the preceding claims,
wherein the radial projection (26) of the collar element (24, 58) is designed to be placed on the collar when the collar element (24, 58) is pressed into the funnel-shaped section (22) of the sleeve (10, 68, 74).

5. Tacking device (2, 56, 72) according to one of the preceding claims,
wherein the collar element (24, 58) has a deformable material, and
wherein the collar element (24, 58) is designed to be squashed radially inwards when it is pressed into the funnel-shaped section (22).

6. Tacking device (2, 56, 72) according to one of the preceding claims,
wherein the predetermined breaking point (36, 70) of the mandrel (30, 64) is spaced apart axially from the radial projection (26) in the direction of the insertion section (28) .

7. Tacking device (2, 56, 72) according to one of the preceding claims,
wherein the mandrel (30, 64) consists of a stronger material than the sleeve (10, 68, 74).

8. Method for attaching two components (4, 6) to each other, having the steps:
- inserting a tacking device (2, 56, 72) according to one of Claims 1 to 7 into a through opening in two components (4, 6) and
- moving the mandrel (30, 64) in a direction towards the first end (12) of the sleeve (10, 68, 74) to squash the sleeve (10, 68, 74) onto the components (4, 6) until the mandrel (30, 64) breaks.

9. Method according to Claim 8, further having the following steps after the use of the tacking device (2, 56, 72) :
- drilling a remaining part of the mandrel (30, 64) out of the tacking device (2, 56, 72) and
- removing the sleeve (10, 68, 74).

## Revendications

1. Dispositif de brochage (2, 56, 72) pour fixer au moins temporairement des composants (4, 6) l'un à l'autre, présentant :
une douille (10, 68, 74) avec une première extrémité (12), une deuxième extrémité (14), un alésage axial (20) et une collerette (16) en saillie radiale à la première extrémité (12),
un mandrin de serrage allongé (30, 64) avec une extrémité de tête (32) et une extrémité de serrage (34),
dans lequel le mandrin de serrage (30, 64) peut être introduit dans l'alésage axial (20) à la deuxième extrémité (14) de la douille (10, 68, 74), peut être amené en butée avec l'extrémité de tête (32) contre une surface de bord de douille et dépasse, à l'état introduit, de la première extrémité (12) de la douille (10, 68, 74),
dans lequel une unité de maintien (41, 67, 78) est prévue, qui est réalisée pour maintenir le mandrin de serrage (30, 64) lorsque le dispositif de brochage (2, 56, 72) est inséré dans une ouverture (8) d'un composant (4, 6),
dans lequel la douille (10, 68, 74) présente un matériau déformable qui, lorsque le dispositif de brochage (2, 56, 72) est inséré dans une ouverture (8) d'un composant (4, 6), est écrasé contre le composant (4, 6) lors du déplacement de l'extrémité de tête (32) du mandrin de serrage (30, 64) en direction de la première extrémité (12) de la douille (10, 68, 74),
dans lequel le mandrin de serrage (30, 64) présente un point destiné à la rupture (36, 70) positionné entre l'extrémité de tête (32) et l'extrémité de serrage (34), avec une section transversale affaiblie qui est réalisée pour que le mandrin de serrage (30, 64) se rompe au niveau du point destiné à la rupture (36, 70) lorsque la douille (10, 68, 74) est écrasée, et une section présentant l'extrémité de serrage (34) est enlevée,
dans lequel l'unité de maintien (41, 67, 78) est réalisée par une section en forme d'entonnoir (22) à la première extrémité (12) de l'alésage axial (20) et un élément de collerette séparé (24, 58),
dans lequel l'élément de collerette (24, 58) présente une saillie radiale (26), une section d'insertion (28) s'étendant axialement et en se rétrécissant à partir de celle-ci, réalisée en correspondance avec la section en forme d'entonnoir (22) et possédant un alésage traversant (60) pour le passage du mandrin de serrage (30, 64),
dans lequel, dans la section en forme d'entonnoir (22) est agencé au moins un premier élément d'engagement (48) entourant partiellement une surface intérieure (38) de la section en forme d'entonnoir (22) et
dans lequel, au niveau de la section d'insertion (28) est agencé au moins un deuxième élément d'engagement (46) entourant partiellement une surface extérieure (40) de la section d'insertion (28), qui est réalisé pour former une liaison par encliquetage avec le premier élément d'engagement (48).

2. Dispositif de brochage (2, 56, 72) selon la revendication 1, dans lequel le premier élément d'engagement (48) et le deuxième élément d'engagement (46) sont réalisés sous forme d'éléments d'encliquetage.

3. Dispositif de brochage (2, 56, 72) selon la revendication 1 ou 2, dans lequel le premier élément d'engagement (48) et le deuxième élément d'engagement (46) sont réalisés sous forme de barbillons.

4. Dispositif de brochage (2, 56, 72) selon l'une quelconque des revendications précédentes, dans lequel la saillie radiale (26) de l'élément de collerette (24, 58) est réalisée pour être placée sur la collerette lorsque l'élément de collerette (24, 58) est pressé dans la section en forme d'entonnoir (22) de la douille (10, 68, 74).

5. Dispositif de brochage (2, 56, 72) selon l'une quelconque des revendications précédentes, dans lequel l'élément de collerette (24, 58) présente un matériau déformable, et dans lequel l'élément de collerette (24, 58) est réalisé pour être écrasé radialement vers l'intérieur lorsqu'il est pressé dans la section en forme d'entonnoir (22).

6. Dispositif de brochage (2, 56, 72) selon l'une quelconque des revendications précédentes, dans lequel le point destiné à la rupture (36, 70) du mandrin de serrage (30, 64) est espacé en direction axiale de la saillie radiale (26) en direction de la section d'insertion (28).

7. Dispositif de brochage (2, 56, 72) selon l'une quelconque des revendications précédentes, dans lequel le mandrin de serrage (30, 64) est constitué d'un matériau plus résistant que la douille (10, 68, 74).

8. Procédé de brochage de deux composants (4, 6) l'un à l'autre, présentant les étapes suivantes :
- l'insertion d'un dispositif de brochage (2, 56, 72) selon l'une quelconque des revendications 1 à 7 dans une ouverture traversante de deux composants (4, 6) et
- le déplacement du mandrin de serrage (30, 64) dans une direction orientée vers la première extrémité (12) de la douille (10, 68, 74) pour écraser la douille (10, 68, 74) contre les composants (4, 6) jusqu'à ce que le mandrin de serrage (30, 64) se rompe.

9. Procédé selon la revendication 8, présentant en outre, après utilisation du dispositif de brochage (2, 56, 72), les étapes suivantes :
- le perçage d'une partie restante du mandrin de serrage (30, 64) du dispositif de brochage (2, 56, 72) et
- le retrait de la douille (10, 68, 74).
